# DEMANDE DE BREVET EUROPEEN

(11) **EP 4 282 696 A1**
(43) Date de publication de la demande: **29.11.2023**
(21) Numéro de dépôt: 22175834.5
(22) Date de dépôt: 27.05.2022
(51) Int. Cl.: B60L 53/80, A47L 11/28, A47L 11/40

(54) **BATTERIE POUR L'ALIMENTATION ÉLECTRIQUE ET PROCÉDÉ DE CHARGEMENT ÉLECTRIQUE D'UN VÉHICULE**

(71) Demandeur: Mathieu, 54202 Toul (FR)
(72) Inventeur: VERBEYST, Olivier, 54200 VILLEY SAINT ETIENNE (FR)
(74) Mandataire: Cabinet Bleger-Rhein-Poupon

(57) **Abrégé**

L'invention concerne une batterie (35) pour l'alimentation en énergie électrique d'un véhicule, tel que notamment un engin (1) de nettoyage de voiries, la batterie (35) comportant un boîtier (2) destiné à être installé dans un logement (3) dédié du véhicule, au moins un accumulateur d'énergie électrique, et un connecteur (4) pourvu d'au moins deux pôles de puissance (4A), ledit boîtier (2) comportant en outre une embase (27) destinée à être fixée sur un support (28) du logement (3).

## Description

L'invention concerne une batterie pour l'alimentation en énergie électrique d'un véhicule, tel que notamment un engin de nettoyage de voiries. L'invention concerne en outre un kit comprenant une telle batterie et des moyens d'assistance de l'installation d'un boîtier de la batterie, un véhicule comportant une telle batterie et un logement pour une telle batterie et un procédé de chargement d'un tel véhicule d'une telle batterie.

A l'heure actuelle, en vue de réduire les émissions de gaz à effet de serre, et limiter les nuisances sonores, de nombreuses communes préconisent le remplacement des balayeuses à moteur thermique par des engins électriques pour réaliser les opérations de nettoyage de leurs quartiers.

De manière connue, électrifier ce type de véhicule consiste à remplacer les actionneurs hydrauliques, classiquement entrainés par un moteur thermique, par un système de batterie électrique alimentant des actionneurs soit électriques, soit électrohydrauliques. La principale contrainte de ce changement est de parvenir à conserver la performance de travail de l'engin considéré sur une journée de travail.

En effet, afin de gêner le moins possible les usagers des zones en cours de nettoyage et convenir pour l'entretien de ruelles parfois très exiguës, ces véhicules présentent généralement une structure très compacte, ne réservant qu'un volume très limité à l'installation d'une batterie. Le dimensionnement des batteries étant tributaire du volume disponible, ceci a pour inconvénient de limiter l'autonomie de ce type d'engins.

Ainsi, les batteries dont sont équipés les véhicules de nettoyage de voiries classiques sont très souvent dimensionnées pour un poste de travail unique, correspondant à une journée de travail de nature standard.

Toutefois, il a été observé qu'avec ce type de véhicules, la quantité d'énergie disponible dans la batterie ne permet souvent pas de couvrir le poste de travail complet, en particulier dans le cas où l'utilisateur l'exploite de façon intensive. Il est alors nécessaire d'arrêter le véhicule pendant un temps plus ou moins long afin de recharger au moins partiellement la batterie, au cours d'une opération de « biberonnage ».

De même, lorsque plusieurs postes de travail consécutifs doivent être enchaînés, les balayeuses électriques actuellement disponibles impliquent couramment d'arrêter le véhicule pendant un temps relativement long, pouvant atteindre au minimum 2 ou 3 heures, afin de recharger les batteries complètement et être en mesure d'entreprendre le poste suivant.

De plus, dans ces deux cas de figure, l'opérateur devra avoir recours à des chargeurs rapides pour recharger ses batteries, ce qui nécessite une infrastructure électrique conséquente sur le site de rechargement. Bien entendu, cette infrastructure devra être d'autant plus conséquente que le parc de véhicules à recharger simultanément sera important, ce qui est généralement le cas dans les villes de taille importante.

Il est également à noter que les opérations de charge rapides et répétées de la batterie d'un véhicule représentent un facteur de vieillissement important dans la vie de la batterie. Le recours à ce type de charge tout au long de l'année diminue sensiblement la durée de vie des batteries.

Un autre inconvénient des balayeuses électriques actuellement proposées sur le marché découle du fait qu'elles sont construites de manière telle que les batteries sont encastrées dans leur structure et nécessitent une intervention lourde des services de maintenance pour leur démontage. En conséquence, tout problème important de la batterie suppose un arrêt complet du véhicule permettant sa réparation. Pendant ce laps de temps, la fonction balayage des lieux public ne peut plus être réalisée.

La présente invention entend pallier l'ensemble des inconvénients mentionnés ci-dessus en proposant une solution permettant de s'affranchir des problèmes liés aux contraintes de dimensionnement des batteries de véhicules électriques tels que des engins électriques de nettoyage de voiries, en vue d'alléger ces derniers, de réduire leur coût, d'en faciliter les opérations de maintenance, et d'éviter des temps de recharge particulièrement pénalisants.

A cet effet, l'invention a pour objet une batterie pour l'alimentation en énergie électrique d'un véhicule, tel que notamment un engin de nettoyage de voiries. La batterie est dimensionnée pour permettre l'avancement du véhicule et/ou l'actionnement d'un équipement de travail du véhicule. La batterie comporte un boîtier destiné à être installé dans un logement dédié du véhicule, au moins un accumulateur d'énergie électrique logé dans le boîtier et un connecteur pourvu d'au moins deux pôles de puissance destinés à permettre l'établissement d'une connexion électrique entre l'accumulateur d'énergie électrique et le véhicule et/ou entre l'accumulateur d'énergie électrique et l'équipement de travail du véhicule. Le boîtier est pourvu d'une embase destinée à être fixée sur un support du logement.

Par ailleurs, selon le cas, la batterie selon l'invention peut également présenter l'une ou plusieurs des caractéristiques suivantes :
- un moyen de commande, le connecteur étant en outre pourvu d'une fiche de connexion destinée à permettre l'établissement d'un lien de communication entre le moyen de commande et un dispositif de commande du véhicule,
- le connecteur est un connecteur unique de la batterie,
- le connecteur regroupe les deux pôles de puissance et la fiche de connexion,
- l'embase est pourvue d'au moins une rainure apte à recevoir un rail du support,
- le boîtier est pourvu d'au moins une ouverture destinée à recevoir un verrou du logement afin de fixer l'embase au support,
- l'ouverture est pourvue dans l'embase,
- le boîtier est pourvu d'une structure en relief adaptée pour permettre sa saisie par un bras de structure complémentaire appropriée.

L'invention a également pour objet un kit comprenant une batterie selon l'invention et des moyens d'assistance de l'installation du boîtier dans son logement de destination.

Par ailleurs, selon le cas, le kit selon l'invention peut également présenter l'une ou plusieurs des caractéristiques suivantes :
- les moyens d'assistance de l'installation du boîtier dans son logement de destination comportent des moyens de préhension du boîtier, les moyens de préhension du boîtier comportant de préférence un chariot de manutention du boîtier pourvu d'un bras de structure appropriée,
- la structure appropriée est complémentaire à la structure en relief du boîtier de la batterie,
- le chariot de manutention comporte un châssis sur lequel le bras est monté en rotation autour d'un axe horizontal entre une position haute et une position basse.

L'invention a également pour objet un véhicule, tel que notamment un engin de nettoyage de voiries, comportant une batterie selon l'invention et un logement muni d'un support, l'embase du boîtier de la batterie étant fixée sur le support.

Par ailleurs, selon le cas, le véhicule selon l'invention peut également présenter l'une ou plusieurs des caractéristiques suivantes :
- le support comporte au moins un rail logé dans la rainure de l'embase du boîtier de la batterie,
- le logement comporte un verrou reçu dans l'ouverture du boîtier pour fixer l'embase au support,
- le support est équipé d'une tringlerie comportant une première tige s'étendant de préférence le long dudit rail et reliée fixement audit support et une seconde tige montée mobile en translation le long d'un axe parallèle à la première tige entre une position active et une position inactive et supportant au moins un doigt en « L » présentant une extrémité libre formant le verrou,
- l'ouverture est formée par un embout cylindrique recevant le verrou dans la position active de la seconde tige,
- le véhicule comporte en outre un levier actionnant le déplacement de la seconde tige entre ses deux positions,
- le levier est monté en rotation sur la première tige entre une position basse correspondant à la position inactive de la seconde tige et une position haute correspondant à la position active de la seconde tige,
- le levier est en appui contre la face arrière du boîtier.

L'invention concerne en outre un procédé de chargement d'un véhicule selon l'invention avec une batterie, comprenant les étapes suivantes :
a) Installation du boîtier de la batterie du véhicule dans le logement du véhicule
b) Fixation de l'embase du boîtier sur le support du logement.

Par ailleurs, selon le cas, le procédé selon l'invention peut également présenter l'une ou plusieurs des caractéristiques suivantes :
- l'installation du boîtier dans le logement est effectué à l'aide de moyens d'assistance de l'installation du boîtier dans son logement,
- la fixation de l'embase sur le support est effectuée en recevant le verrou du support dans l'ouverture du boîtier.

D'autres caractéristiques et avantages de l'invention ressortiront de la description détaillée qui va suivre, qui se rapporte à un exemple particulier de réalisation d'un kit selon l'invention, qui ne doit cependant pas être considéré comme limitatif de l'invention.

La compréhension de cette description sera facilitée en se référant aux figures suivantes :

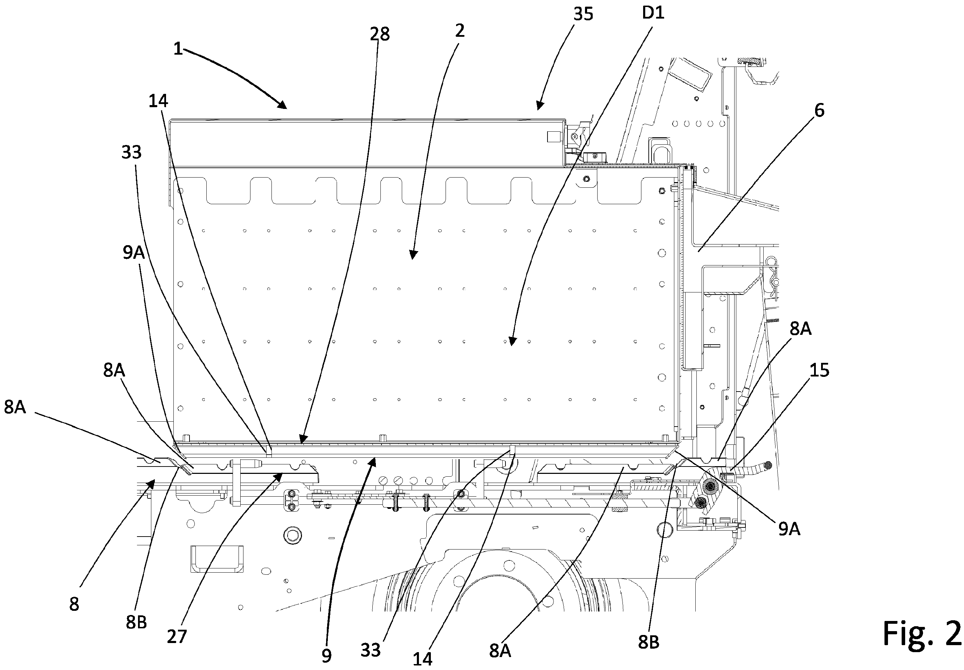

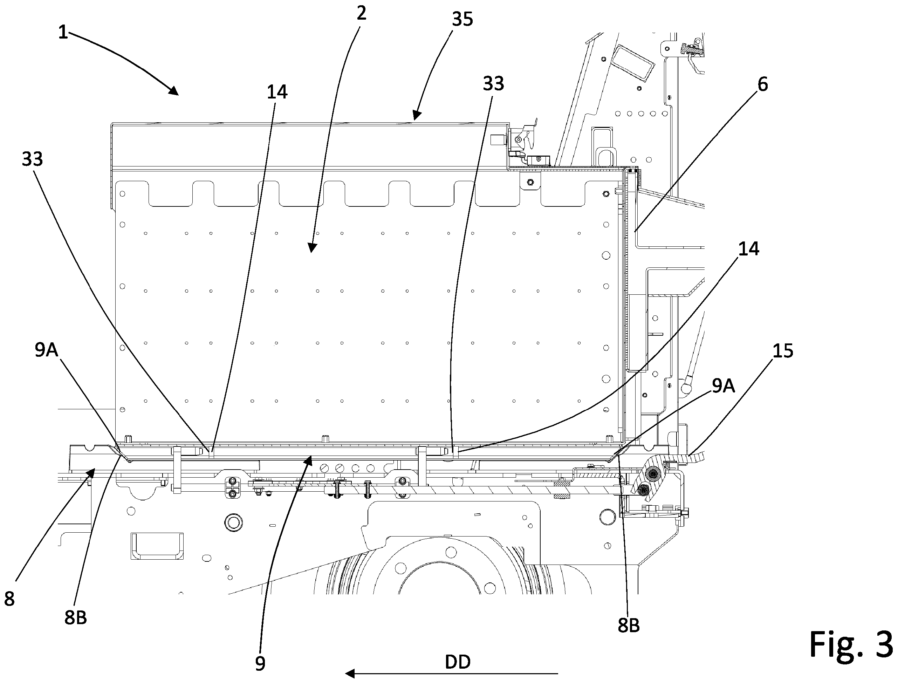

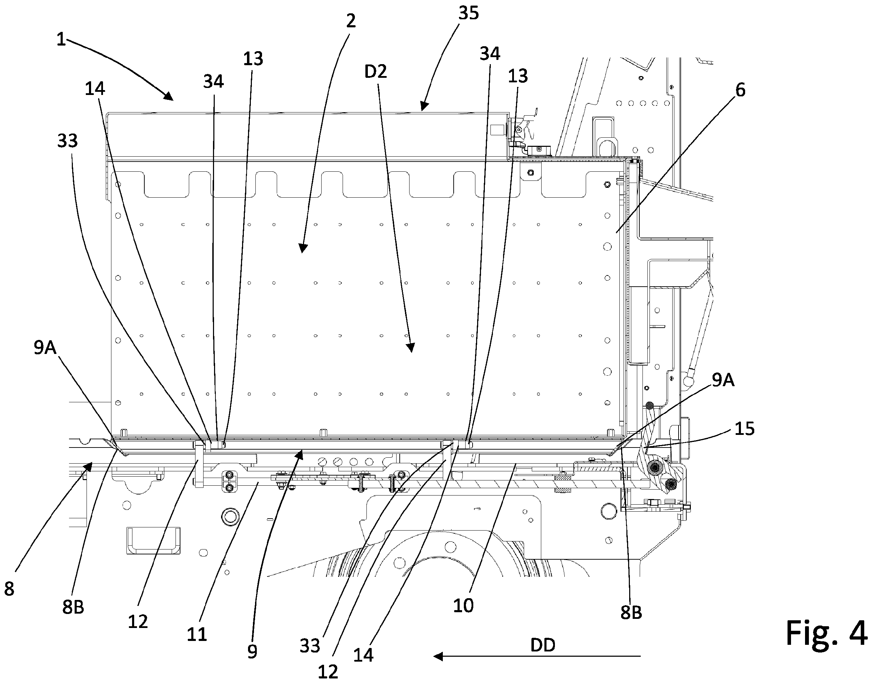

Les figures 1, 2, 3 et 4 sont des vues illustrant les différentes étapes de la mise en œuvre d'un kit selon l'invention pour alimenter un véhicule en énergie électrique ;

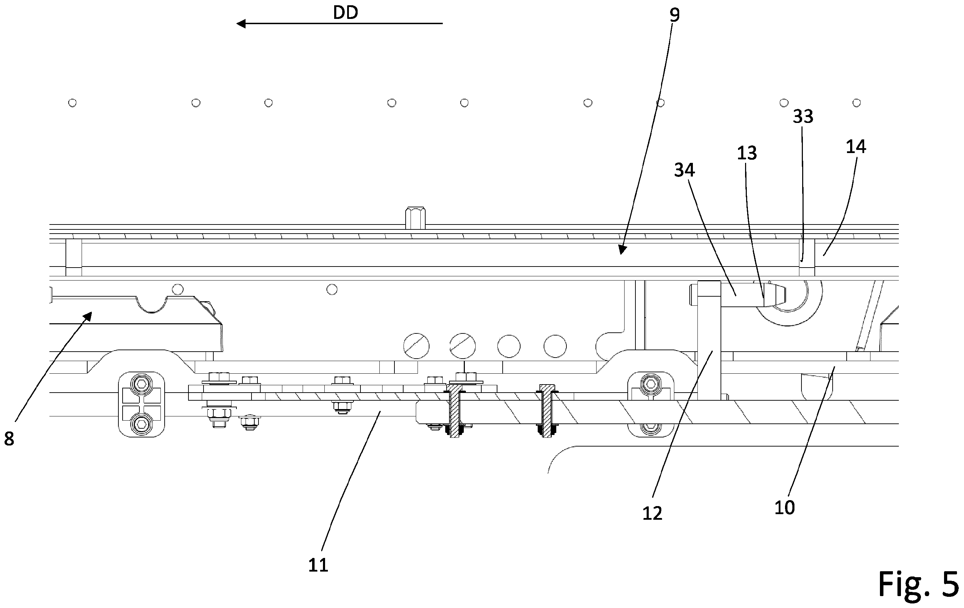

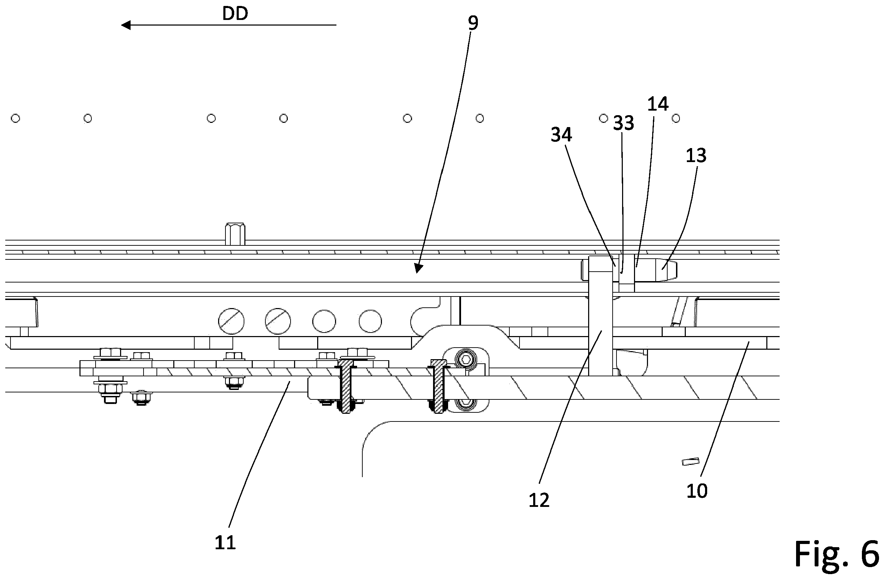

Les figures 5 et 6 sont des vues agrandies des détails D1 et D2 des figures 2 et 4 ;

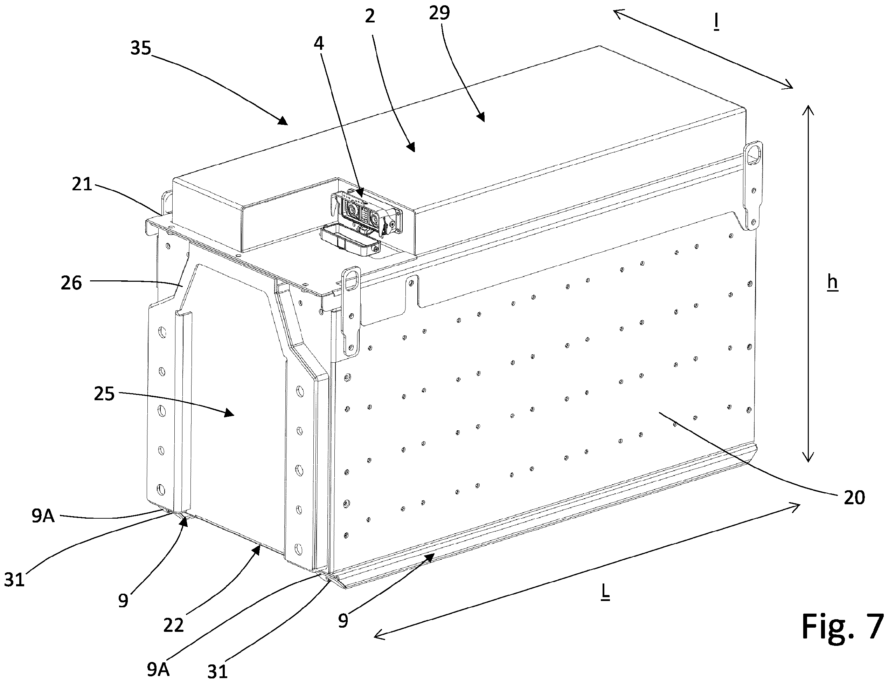

La figure 7 représente une vue en perspective de la batterie selon l'invention que comporte le kit selon l'invention ;

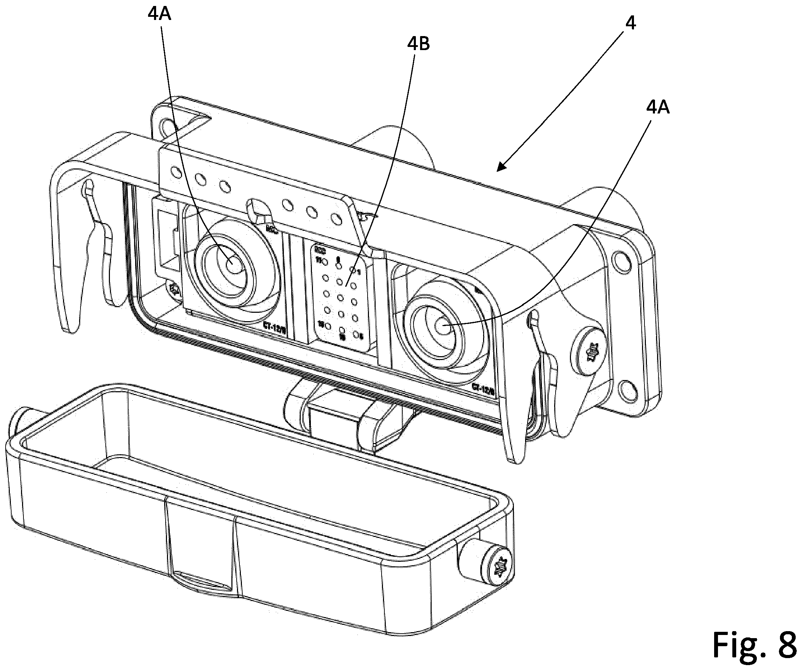

La figure 8 représente une vue en perspective d'un connecteur de la batterie selon l'invention ;

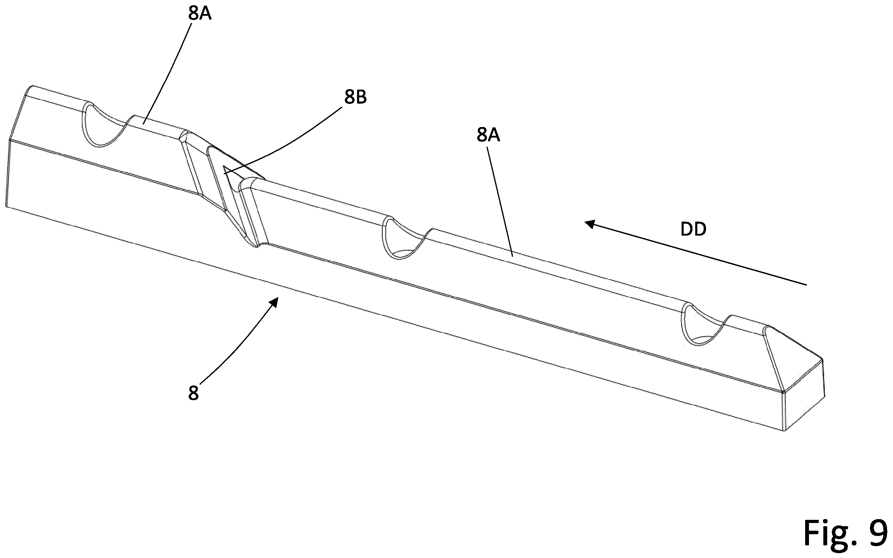

La figure 9 représente une vue en perspective d'un rail d'un support du véhicule sur lequel la batterie est destinée à être installée ;

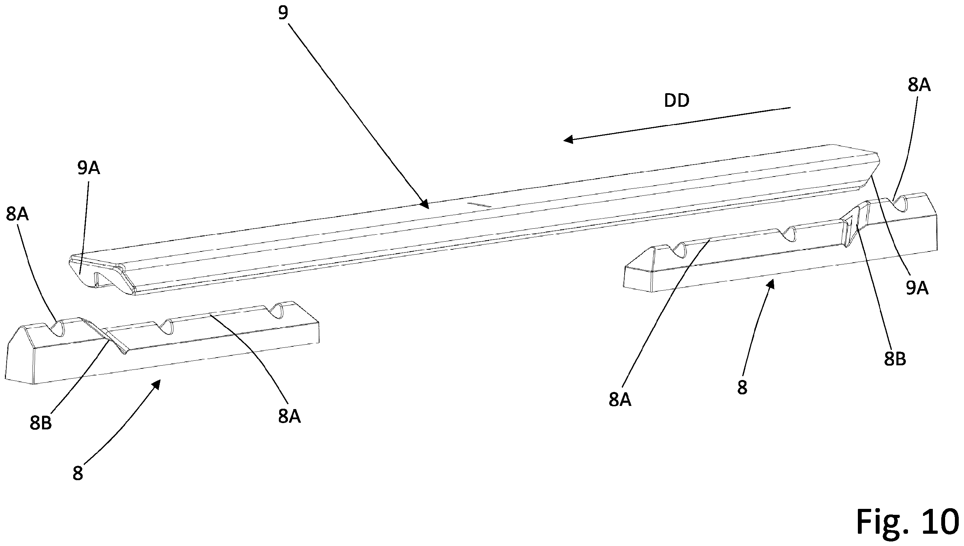

La figure 10 représente une vue en perspective du rail du support du véhicule et d'une partie d'un socle de la batterie formant un patin ;

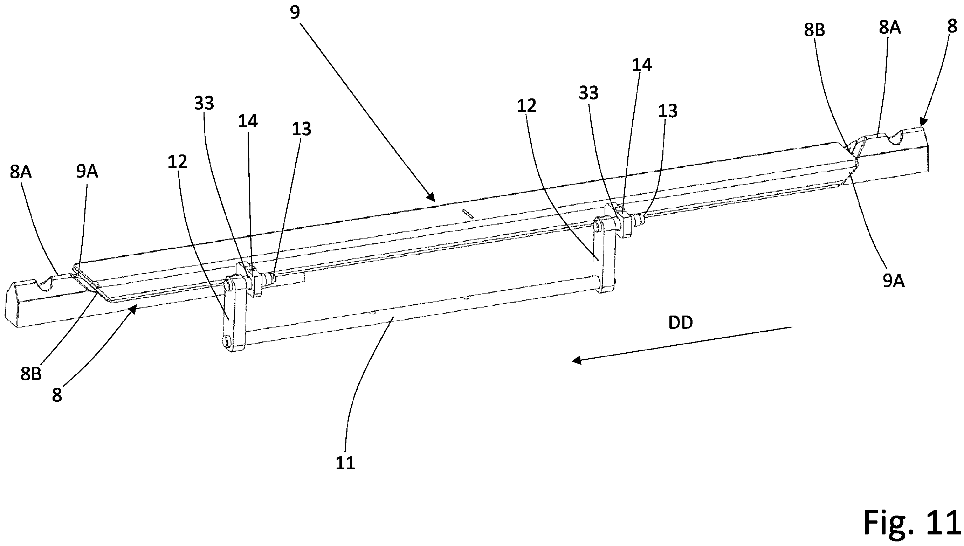

La figure 11 représente une vue en perspective du rail du support du véhicule, de la partie du socle de la batterie formant le patin et un verrou du support ;

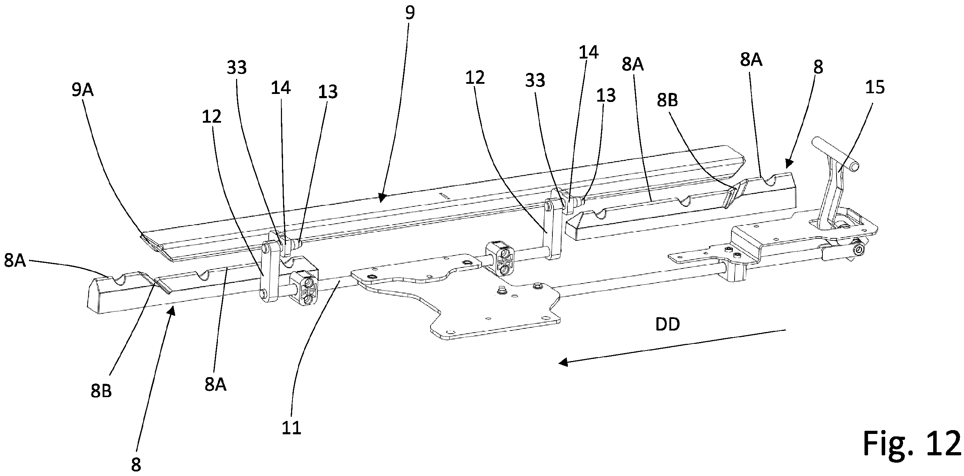

La figure 12 représente une vue en perspective du rail du support du véhicule, de la partie du socle de la batterie formant le patin et d'une tringlerie du support comprenant le verrou.

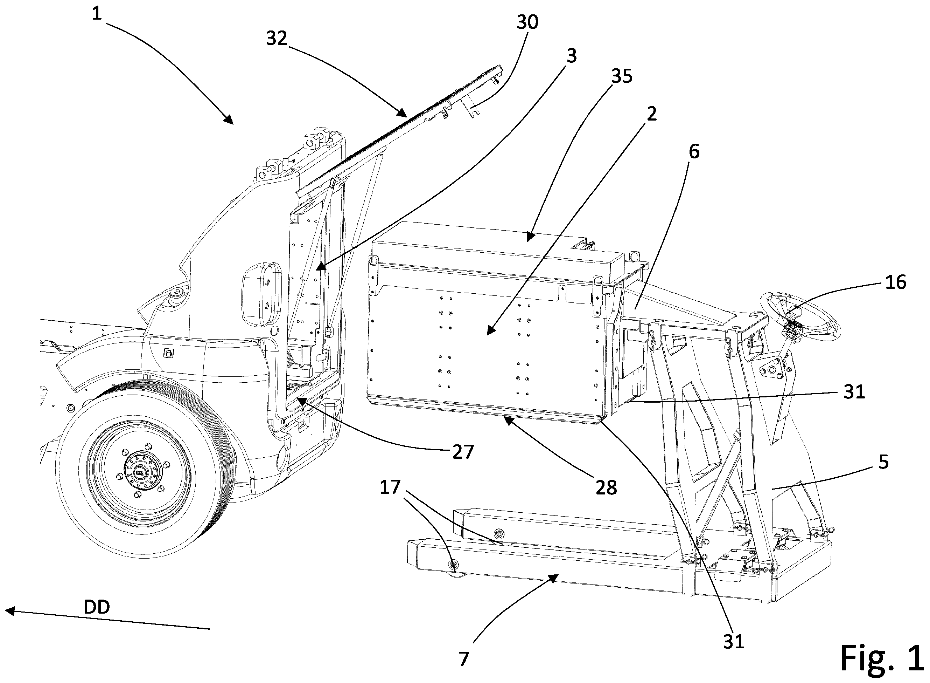

En référence à la figure 1, la batterie 35 selon l'invention est décrit dans le cadre de l'alimentation en énergie électrique d'un engin de nettoyage de voiries 1. L'invention a également pour objet un kit comprenant une batterie 35 selon l'invention et des moyens d'assistance de l'installation du boîtier 2 dans son logement 3 de destination et un véhicule 1 tel que notamment un engin 1 de nettoyage de voiries, comportant une batterie selon l'invention et un logement 3 muni d'un support 28, l'embase 27 du boîtier 2 de la batterie étant fixée sur le support 28. L'invention a en outre pour objet un procédé de chargement d'un véhicule selon l'invention avec une batterie 35. Le procédé comprend les étapes suivantes :
a) Installation du boîtier 2 de la batterie du véhicule 1 dans le logement 3 du véhicule 1 ;
b) Fixation de l'embase 27 du boîtier 2 sur le support 28 du logement 3.

Tel qu'illustré, la batterie 35 comporte un boîtier 2, destiné à être installé dans un logement dédié 3 de l'engin de nettoyage de voiries 1, adapté pour héberger au moins un accumulateur (non illustré) d'énergie électrique, et avantageusement muni d'un connecteur 4 destiné à permettre l'établissement d'une connexion électrique entre l'accumulateur d'énergie électrique et l'engin 1 et/ou entre l'accumulateur d'énergie électrique et un équipement de travail, par exemple une pompe d'aspiration, de l'engin 1.

La batterie 35 peut en outre être pourvue d'un système de refroidissement des accumulateurs. Le système de refroidissement peut être un système de refroidissement passif qui est au moins partiellement formé par le boîtier 2. De façon alternative, le système de refroidissement peut être un système de refroidissement actif.

Le boîtier 2 peut être fabriqué en un matériau métallique, de préférence en acier ou en aluminium. Un boîtier 2 fabriqué en un tel matériau métallique est particulièrement avantageux lorsqu'il forme au moins une partie du système de refroidissement passif.

L'embase 27 et/ou le support 28 peut/peuvent être fabriqué(e)(s) en un matériau plastique, de préférence en polyuréthane.

Le connecteur 4 est pourvu d'au moins deux pôles de puissance 4A destinés à permettre l'établissement d'une connexion électrique entre l'accumulateur d'énergie électrique et le véhicule et/ou entre l'accumulateur d'énergie électrique et l'équipement de travail du véhicule 1.

La batterie 35 peut en outre comprendre un moyen de commande 29. Le connecteur 4 peut être pourvu d'une fiche de connexion 4B destinée à permettre l'établissement d'un lien de communication entre le moyen de commande 29 et un dispositif de commande du véhicule 1.

Le moyen de commande 29 peut en outre être apte à commander le système de refroidissement actif de la batterie 35.

Le connecteur 4 peut être un connecteur unique de la batterie 35. Le connecteur 4 regroupe préférentiellement les deux pôles de puissance 4A et la fiche de connexion 4B.

Chaque pôle de puissance 4A peut comporter un socle de préférence de forme non-circulaire. Un connecteur complémentaire (non représenté dans les figures) destiné à être connecté au connecteur 4 peut comporter des pôles de puissance complémentaires. Ces pôles de puissance complémentaires peuvent de leur côté être chacun pourvus d'un réceptacle de forme complémentaire à la forme du socle des pôles de puissance 4A du connecteur 4. Ainsi, il peut être empêché que le connecteur 4 soit connecté dans le faux sens où les pôles de puissances 4A ne sont pas connectés aux pôles respectifs du véhicule 1.

Il convient de noter que le boîtier 2 peut ici présenter une paroi périphérique d'allure parallélépipédique comportant deux faces latérales 20, 21, de hauteur h et de longueur L, une face inférieure 22 de largeur l, une face supérieure 23, une face avant 24 et une face arrière 25. La hauteur h sensiblement peut par exemple être sensiblement égale à 655 mm, la longueur L sensiblement égale à 1040 mm et la largeur l sensiblement égale à 495 mm. La face inférieure 22 peut former l'embase 27.

Le boîtier 2 peut être pourvu d'au moins une ouverture 33 destinée à recevoir un verrou 34 du logement 3 afin de fixer l'embase 27 au support 28, l'ouverture 33 étant de préférence pourvue dans l'embase 27.

Conformément à l'invention, le kit comporte en outre des moyens d'assistance de l'installation du boîtier 2 dans son logement de destination 3. Le logement 3 du véhicule 1 peut être pourvu de moyens de blocage en position du boîtier 2.

Le support 28 peut présenter une forme complémentaire à la forme de l'embase 27.

Le support 28 peut comporter au moins un rail 8. L'embase 27 peut être pourvue d'au moins une rainure 31 apte à recevoir le rail 8.

L'embase 27 peut comprendre au moins une coulisse 9. De préférence, la rainure 31 peut être formée dans la coulisse 9.

La coulisse 9 peut de part et d'autre être pourvue d'un chanfrein 9A et ainsi présenter, dans une section le long d'un plan vertical et parallèle à une direction principale de déplacement DD du véhicule 1, la forme d'une cuvette.

Le rail 8 peut être pourvu d'au moins deux niveaux 8A reliés par une surface inclinée 8B et ainsi présenter, dans la même section le long d'un plan vertical et parallèle à la direction principale de déplacement DD du véhicule 1, une forme en gradins.

Le rail 8 peut être logé dans la rainure 31 de l'embase 27 du boîtier 2 de la batterie. Le rail 8 peut être formé sur ou fixé à une paroi de fond 28B du support 28. Le logement 3 peut comporter un verrou 34 reçu dans l'ouverture 33 du boîtier pour fixer l'embase 27 au support 28.

La surface inclinée 8B peut présenter une forme complémentaire au chanfrein 9A. Lorsque l'embase 27 est fixée sur le support 28, le chanfrein 9A vient en appui contre la surface inclinée 8B.

Le rail 8 peut s'étendre en parallèle à une direction principale de déplacement DD du véhicule 1. Le rail 8 et/ou chaque niveau 8A du rail peut/peuvent présenter une section de forme essentiellement triangulaire, de préférence une section de forme d'un triangule isocèle.

Le rail 8 peut permettre un centrage du boîtier 2 dans le logement 3 dans une direction transversale, c'est-à-dire une direction horizontale et orthogonale à la direction principale de déplacement DD du véhicule 1, lorsque le rail 8 est reçu dans la rainure 31.

De façon complémentaire, la rainure 31 peut s'étendre en parallèle à la direction principale de déplacement DD du véhicule 1. La rainure 31 peut présenter une section de forme essentiellement triangulaire, de préférence une section de forme d'un triangule isocèle.

Le rail 8 et en particulier la surface inclinée 8B du rail peut/peuvent permettre un centrage du boîtier 2 dans le logement 3 dans la direction principale de déplacement DD du véhicule 1, lorsque le rail 8 est reçu dans la rainure 31 et le chanfrein 9A vient en appui contre la surface inclinée 8B.

Selon le mode de réalisation préférentiel de l'invention, le support 28 est pourvu de deux rails 8 s'étendant en parallèle l'un par rapport à l'autre et/ou en parallèle à la direction principale de déplacement DD du véhicule 1. De façon correspondante, l'embase 27 peut être pourvue de deux rainures 31 et/ou de deux coulisses 9 s'étendant chacune en parallèle l'une par rapport à l'autre et/ou en parallèle à la direction principale de déplacement DD du véhicule 1.

Le support 28 peut être équipé d'une tringlerie comportant une première tige 10 s'étendant de préférence le long dudit rail 8 et reliée fixement audit support 28 et une seconde tige 11 montée mobile en translation le long d'un axe parallèle à la première tige 10 entre une position active et une position inactive et supportant au moins un doigt 12 en « L » présentant une extrémité libre 13 formant le verrou 34, l'ouverture 33 étant de préférence formée par un embout cylindrique 14 recevant le verrou 34 dans la position active de la seconde tige 11. Dans le mode de réalisation préféré de l'invention, le boitier peut comprendre deux ouvertures 33 chacune formée par un embout cylindrique 14. Les embouts cylindriques 14 peuvent présenter des axes parallèles et/ou être coaxiaux.

L'embout cylindrique 14 peut comporter une paroi de fond s'étendant préférentiellement dans un plan qui est orthogonal à la direction principale de déplacement DD du véhicule 1. L'extrémité libre 13 peut venir en appui contre la paroi de fond de l'embout cylindrique 14 lorsque la seconde tige 11 prend la position active.

Dans la position active de la seconde tige 11, la batterie 35 est immobilisée dans la direction principale de déplacement DD du véhicule 1.

Le véhicule 1 peut comporter un levier 15 actionnant le déplacement de la seconde tige 11 entre ses deux positions, le levier 15 étant monté en rotation sur la première tige 10 entre une position basse correspondant à la position inactive de la seconde tige 11 et une position haute correspondant à la position active de la seconde tige 11 et dans laquelle le levier 15 est en appui contre la face arrière 25 du boîtier 2.

Le véhicule 1 peut en outre comporter une porte 32 donnant accès au logement 3. Le levier 15 peut être agencé à proximité de la porte 32 de sorte à pouvoir empêcher la fermeture de la porte 32 lorsque le levier 15 est en position basse. A cet effet, la porte 32 peut être pourvue d'une butée 30, de préférence fabriquée à partir d'une tôle métallique pliée, apte à venir en appui contre le levier 15 lorsque le levier 15 est en position basse pour empêcher la fermeture de la porte 32. Ainsi, la position basse du levier 15 peut empêcher la fermeture de la porte 32.

Le véhicule 1 peut en outre comprendre un capteur permettant de détecter une position fermée de la porte 32.

Dans la variante de réalisation illustrée, les moyens d'assistance de l'installation du boîtier 2 dans son logement de destination 3 comportent d'une part un chariot 5 de manutention du boîtier 2. Une structure en relief 26 peut être formée sur le boîtier, de préférence sur la face arrière du boîtier 2. La structure en relief 26 peut être adaptée pour permettre sa saisie par un bras 6 dont peut être équipé le chariot de manutention 5.

Plus précisément, le chariot de manutention 5 peut comporter un châssis 7, muni de roues 17, et sur lequel le bras 6 est monté en rotation autour d'un axe horizontal X, entre une position haute éloignée du sol et une position basse rapprochée du sol.

Tel que le montre la figure 1 par exemple, le bras 6 peut être pourvu à son extrémité d'une plaque pouvant venir se caler dans la structure en relief 26. La plaque peut également venir en appui contre une face du boîtier 2, de préférence contre la face arrière 25 du boîtier 2.

La plaque et/ou la structure en relief 26 peut/peuvent présenter une forme trapézoïdale. La base courte du trapèze peut se situer sur la partie supérieure de la structure en relief 26 et/ou de la plaque. De façon alternative, la plaque et/ou la structure en relief 26 peut/peuvent présenter une forme essentiellement rectangulaire avec les coins situés sur la partie supérieure du rectangle arrondis et/ou chanfreinés.

Ainsi, la plaque peut venir se caler dans la structure en relief 26 par un mouvement du bras 6 du bas vers le haut. De préférence, la plaque vient en appui contre la face arrière 25 du boîtier 2 avant d'effectuer le mouvement du bras 6 du bas vers le haut calant la plaque dans la structure en relief 26.

Par ailleurs, selon le mode de réalisation préféré de l'invention, le support 28 comporte une paire de rails 8 et l'embase 27 comporte une paire de rainures 31. Lorsque la batterie 35 est logée dans le logement 3, chaque rainure 31 reçoit l'un des rails 8. L'embase 27 peut être pourvue d'au moins une coulisse 9, de préférence deux coulisses 9, dans chacune desquelles est formée l'une des rainures 31.

En outre, l'extrémité libre 13 du doigt 12 peut s'étendre au voisinage du rail 8.

Le procédé peut en outre comprendre l'une ou plusieurs des étapes suivantes :
- l'installation du boîtier 2 dans le logement 3 à l'aide de moyens d'assistance de l'installation du boîtier 2 dans son logement 3 ; et/ou
- la fixation de l'embase 27 sur le support 28 en recevant le verrou 34 du support 28 dans l'ouverture 33 du boîtier 2.

Le procédé selon l'invention peut en outre comprendre une ou plusieurs des étapes suivantes :
- Ouverture d'une porte 32 du véhicule 1 donnant accès au logement 3,
- Mise du levier 15 en position basse avant l'installation du boîtier 2 dans le logement 3,
- Saisie du boîtier 2 au moyen du chariot de manutention 5,
- Levage du bras 6 pour lever le boîtier 2 au moyen du chariot de manutention 5,
- Déplacement de ce même boîtier 2 vers le volume intérieur du logement 3 de l'engin 1 par translation du chariot de manutention 5 facilitée par la présence des roues 17,
- Abaissement du bras 6 du chariot de manutention 5, de préférence au moyen d'un volant 16, en vue de positionner les rainures 31 du boîtier 2 sur les rails 8 du logement 3,
- Centrage du boîtier 2 de la batterie 35 en direction transversale par positionnement des rainures 31 sur les rails 8,
- Centrage du boîtier 2 de la batterie 35 dans la direction principale de déplacement DD du véhicule 1 en mettant en appui le chanfrein 9A contre la surface inclinée 8B,
- Verrouillage et blocage en position du boîtier 2, notamment dans la direction principale de déplacement DD du véhicule 1, par déplacement du levier 15 vers sa position haute. Lors de cette étape, le déplacement en translation de la seconde tige 11 a pour effet d'engager les extrémités libres 13 des doigts en « L » 12 dans les embouts cylindriques 14. A ce stade, le boîtier 2 formant la batterie 35 de l'engin 1 est bloqué en translation, dans une direction par les doigts 12 et en direction inverse par le levier 15 appuyant dans sa position haute sur la face arrière 25 du boîtier 2,
- Raccordement électrique de l'engin 1 à la batterie 35 au moyen du connecteur unique 4,
- Fermeture de la porte 32 du véhicule 1 donnant accès au logement 3,
- Détection de la position fermée de la porte 32,
- Mise sous tension des pôles puissance 4A du connecteur 4, de préférence suite à la détection de la position fermée de la porte 32.

Le déchargement de la batterie 35 de l'engin 1 s'effectue en réalisant les étapes ci-dessus dans l'ordre inverse.

Tel qu'il ressort de ce qui précède, la batterie 35, le kit, le véhicule 1 et/ou le procédé selon l'invention permet/permettent avantageusement de procéder rapidement à l'installation d'une batterie 35 correctement dimensionnée dans le logement dédié 3 d'un véhicule 1 puis de la remplacer facilement lorsqu'elle est déchargée, par une autre batterie 35 dûment chargée.

Ainsi, la mise en œuvre de la batterie 35, du kit, du véhicule 1 et du procédé selon l'invention permet/permettent de disposer, d'une part d'une batterie 35 juste dimensionnée à l'application souhaitée, par exemple le nettoyage d'une chaussée pendant un demi-poste, puis de pouvoir l'interchanger facilement, rapidement et sans perte de temps intempestive, à la pause déjeuner.

En d'autres termes, de par ce principe et par le biais de plusieurs petites batteries 35 réalisées chacune au moyen d'un boîtier 2 pourvu d'au moins un accumulateur, il est très aisé de pouvoir couvrir tous les cas d'utilisation, comme par exemple, lorsque le véhicule considéré est un engin 1 de nettoyage de voiries, une utilisation simple poste, ou trois postes, une utilisation légère ou intensive ou toute autre utilisation possible.

Par ailleurs, la facilité de remplacement de la batterie 35 permet également de procéder à une charge lente de la batterie 35 déposée pendant que le véhicule est en utilisation.

Une telle charge lente permet de conserver au mieux la durée de vie de la batterie 35 en nombre de cycles et n'implique pas de disposer d'une infrastructure particulière pour les villes ayant des flottes de véhicules.

Enfin, en cas de panne importante de la batterie, un remplacement de celle-ci par une batterie 35 fonctionnelle permet à l'engin de redémarrer et de poursuivre ses opérations telles que le balayage des lieux publics.

## Revendications

1. Batterie pour l'alimentation en énergie électrique d'un véhicule, tel que notamment un engin (1) de nettoyage de voiries, la batterie (35) étant dimensionnée pour permettre l'avancement du véhicule et/ou l'actionnement d'un équipement de travail du véhicule, ladite batterie (35) comportant un boîtier (2) destiné à être installé dans un logement (3) dédié du véhicule, au moins un accumulateur d'énergie électrique logé dans le boîtier (2), et un connecteur (4) pourvu d'au moins deux pôles de puissance (4A) destinés à permettre l'établissement d'une connexion électrique entre l'accumulateur d'énergie électrique et le véhicule et/ou entre l'accumulateur d'énergie électrique et l'équipement de travail du véhicule, ledit boîtier (2) étant pourvu d'une embase (27) destinée à être fixée sur un support (28) du logement (3).

2. Batterie selon la revendication 1, **caractérisée en ce qu'**elle comporte en outre un moyen de commande (29) et **en ce que** le connecteur (4) est en outre pourvu d'une fiche de connexion (4B) destinée à permettre l'établissement d'un lien de communication entre le moyen de commande (29) et un dispositif de commande du véhicule.

3. Batterie selon l'une quelconque des revendications 1 ou 2, **caractérisée en ce que** le connecteur (4) est un connecteur unique de la batterie (35), préférentiellement regroupant les deux pôles de puissance (4A) et la fiche de connexion (4B).

4. Batterie selon l'une quelconque des revendications 1 à 3, **caractérisée en ce que** l'embase (27) est pourvue d'au moins une rainure (31) apte à recevoir un rail (8) du support (28).

5. Batterie selon l'une quelconque des revendications 1 à 4, **caractérisée en ce que** le boîtier (2) est pourvu d'au moins une ouverture (33) destinée à recevoir un verrou (34) du logement (3) afin de fixer l'embase (27) au support (28), l'ouverture (33) étant de préférence pourvue dans l'embase (27).

6. Batterie selon l'une quelconque des revendications 1 à 5, **caractérisée en ce que** le boîtier (2) est pourvu d'une structure en relief (26) adaptée pour permettre sa saisie par un bras (6) de structure complémentaire appropriée.

7. Kit comprenant une batterie (35) selon l'une quelconque des revendications 1 à 6 et des moyens d'assistance de l'installation du boîtier (2) dans son logement (3) de destination.

8. Kit selon la revendication 7, **caractérisé en ce que** les moyens d'assistance de l'installation du boîtier (2) dans son logement (3) de destination comportent des moyens de préhension du boîtier (2), les moyens de préhension du boîtier (2) comportant de préférence un chariot (5) de manutention du boîtier (2) pourvu d'un bras (6) de structure appropriée, la structure appropriée étant de préférence complémentaire à la structure en relief (26) du boîtier (2).

9. Kit selon la revendication 8, **caractérisé en ce que** le chariot (5) de manutention comporte un châssis (7) sur lequel le bras (6) est monté en rotation autour d'un axe (X) horizontal entre une position haute et une position basse.

10. Véhicule, tel que notamment un engin (1) de nettoyage de voiries, comportant une batterie (35) selon l'une quelconque des revendications 1 à 6 et un logement (3) muni d'un support (28), l'embase (27) du boîtier (2) de la batterie (35) étant fixée sur le support (28).

11. Véhicule selon la revendication 10, **caractérisé en ce que** le support (28) comporte au moins un rail (8) logé dans la rainure (31) de l'embase (27) du boîtier (2) de la batterie (35).

12. Véhicule selon l'une quelconque des revendications 10 ou 11, **caractérisé en ce que** le logement (3) comporte un verrou (34) reçu dans l'ouverture (33) du boîtier pour fixer l'embase (27) au support (28).

13. Véhicule selon la revendication 12, **caractérisé en ce que** le support (28) est équipé d'une tringlerie comportant une première tige (10) s'étendant de préférence le long dudit rail (8) et reliée fixement audit support (28) et une seconde tige (11) montée mobile en translation le long d'un axe parallèle à la première tige (10) entre une position active et une position inactive et supportant au moins un doigt (12) en « L » présentant une extrémité libre (13) formant le verrou (34), l'ouverture (33) étant de préférence formée par un embout cylindrique (14) recevant le verrou (34) dans la position active de la seconde tige (11).

14. Véhicule selon la revendication 13, **caractérisé en ce qu'**il comporte un levier (15) actionnant le déplacement de la seconde tige (11) entre ses deux positions, le levier (15) étant monté en rotation sur la première tige (10) entre une position basse correspondant à la position inactive de la seconde tige (11) et une position haute correspondant à la position active de la seconde tige (11), le levier (15) étant de préférence en appui contre une face arrière (25) du boîtier (2).

15. Procédé de chargement d'un véhicule (1) selon l'une quelconque des revendications 10 à 14 avec une batterie (35) selon l'une quelconque des revendications 1 à 6, comprenant les étapes suivantes :
c) Installation du boîtier (2) de la batterie (35) du véhicule (1) dans le logement (3) du véhicule (1) et
d) Fixation de l'embase (27) du boîtier (2) sur le support (28) du logement (3).

16. Procédé selon la revendication 15, **caractérisé en ce que** l'installation du boîtier (2) dans le logement (3) est effectué à l'aide de moyens d'assistance de l'installation du boîtier (2) dans son logement (3).

17. Procédé selon l'une quelconque des revendications 15 ou 16, **caractérisé en ce que** la fixation de l'embase (27) sur le support (28) est effectuée en recevant le verrou (34) du support (28) dans l'ouverture (33) du boîtier (2).
